# EUROPEAN PATENT APPLICATION

(11) **EP 4 815 410 A1**
(43) Date of publication of application: **30.09.2026**
(21) Application number: 25873919.2
(22) Date of filing: 01.08.2025
(51) Int. Cl.: H04L 69/08, H01M 10/42, H04L 12/40

(54) **BATTERY MANAGEMENT SYSTEM AND COMMUNICATION PROTOCOL CHANGING METHOD THEREFOR**

(30) Priority: 27.09.2024 KR 20240131320
(71) Applicant: LG Energy Solution, Ltd., Seoul 07335 (KR)
(72) Inventor: PARK, Jongdoo, Daejeon 34122 (KR)
(74) Representative: Plasseraud IP
(86) International application number: PCT/KR2025/011538
(87) International publication number: WO 2026/071449

(57) **Abstract**

A battery management system configured to monitor a battery module stores a metadata list including first metadata of at least one first communication protocol. In response to a start sequence received from a higher-level device not matching a start sequence of the first metadata included in the metadata list, the battery management system transmits a request to the higher-level device, receives second metadata of a second communication protocol from the higher-level device in response to the request, and performs communication with the higher-level device based on the second metadata.

## Description

### [Technical Field]

### CROSS-REFERENCE TO RELATED APPLICATION

This application claims priority to and the benefit of Korean Patent Application No. 10-2024-0131320 filed in the Korean Intellectual Property Office on September 27, 2024, the entire contents of which are incorporated herein by reference.

The disclosure relates to a battery management system and a method of changing a communication protocol therein.

### [Background Art]

Electric vehicles or hybrid vehicles are automobiles that obtain power by driving a motor mainly using a battery as a power source, and research is being actively conducted as they are an alternative that can solve the pollution and energy problems of internal combustion automobiles. Furthermore, rechargeable batteries are used in various external apparatuses other than the electric vehicles.

When a battery is connected to an external device, a battery management system of the battery may perform communication with a higher-level device. The higher-level device may be, for example, an inverter or a rectifier included in the external device (e.g., a vehicle). As there are many types of higher-level devices and each uses a different protocol, when the higher-level device with which the battery management system communicates changes, a software change or update is required to change the communication protocol. However, changing the software may take a long time, and costs may be incurred due to the development and certification of the changed software.

Meanwhile, a communication protocol conversion device may be added to the battery management system, but the same problem may arise in that the software change or update is required to change the communication protocol of the communication protocol conversion device when the communication protocol is changed.

### [Disclosure]

### [Technical Problem]

Some embodiments may provide a battery management system and a method of changing a communication protocol therein, which can efficiently change a communication protocol.

### [Technical Solution]

According to some embodiments, a battery management system configured to monitor a battery module may include a communication circuit configured to be used for communication with a higher-level device, and a processor configured to, in response to a start sequence received from the higher-level device not matching a start sequence of the first metadata included in the metadata list, transmit a request to the higher-level device, receive second metadata of a second communication protocol from the higher-level device in response to the request, and perform communication with the higher-level device based on the second metadata.

According to some embodiments, a battery apparatus including the battery management system described above and the battery module may be provided.

According to some embodiments, a method of changing a communication protocol in a battery management system configured to monitor a battery module may be provided. The method may include receiving a start sequence from a higher-level device, determining whether the start sequence received from the higher-level device matches a start sequence of first metadata stored by the battery management system, transmitting a request to the higher-level device in response to the received start sequence not matching the start sequence of the first metadata, receiving second metadata of a second communication protocol from the higher-level device in response to the request, and performing communication with the higher-level device based on the second metadata.

### [Description of the Drawings]

FIG. 1 is a block diagram of a battery apparatus according to some embodiments.
FIG. 2 is a block diagram of a battery management system according to some embodiments.
FIG. 3 is a diagram for explaining a change of a communication protocol according to some embodiments.
FIG. 4 is a flowchart of a communication protocol changing method according to some embodiments.
FIG. 5 and FIG. 6 are each a diagram illustrating an example of metadata of a communication protocol according to some embodiments.
FIG. 7 is a diagram illustrating an example of a data map of a battery management system according to some embodiments.

### [Mode for Invention]

In the following detailed description, only certain embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

When it is described that an element is "connected" to another element, it should be understood that the element may be directly connected to the other element or connected to the other element through a third element. On the other hand, when it is described that an element is "directly connected" to another element, it should be understood that the element is connected to the other element through no third element.

As used herein, a singular form may be intended to include a plural form as well, unless the explicit expression such as "one" or "single" is used.

In flowcharts described with reference to the drawings, the order of operations or steps may be changed, several operations or steps may be merged, a certain operation or step may be divided, and a specific operation or step may not be performed.

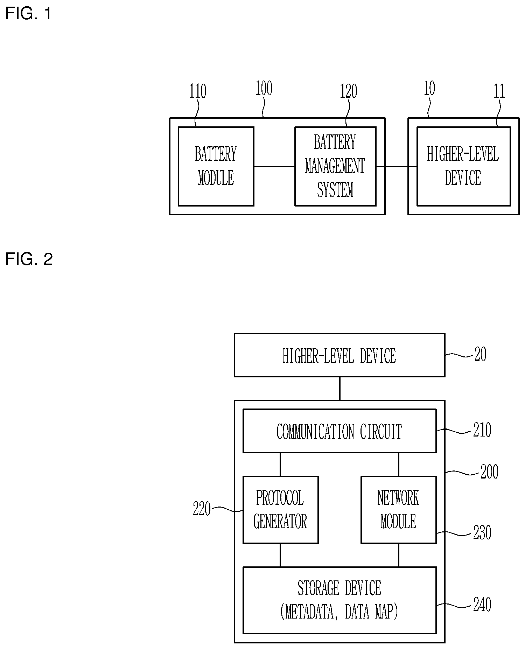

FIG. 1 is a block diagram of a battery apparatus according to some embodiments.

Referring to FIG. 1, a battery apparatus 100 may include a battery module 110 and a battery management system 120. In some embodiments, the battery apparatus 100 may be provided in the form of a battery pack.

The battery apparatus 100 may be connected to an external device 10. When the external device 10 is a load, the battery apparatus 100 may be discharged by operating as a power source that supplies power to the load. The external device operating as a load may be, for example, a mobility device, an energy storage system (ESS), or an electronic device, and the mobility device may be, for example, a vehicle such as an electric vehicle, a hybrid vehicle, or smart mobility.

The battery module 110 may include a plurality of battery cells. The plurality of battery cells may be connected, for example, in series. In some embodiments, the battery apparatus 100 may include a plurality of battery modules 110. The plurality of battery modules 110 may be connected in series or in parallel.

The battery management system 120 may be connected to the battery module 110, and may monitor or manage the battery module 110. In some embodiments, the battery management system 120 may monitor the state of the battery cells included in the battery module 110 (e.g., cell voltage and/or state of charge) and/or the state of the battery module 110 (e.g., voltage, temperature, and/or current of the battery module 110), and may transmit the monitored data to a device 11 of the external device 10. From a communication perspective, the device 11 may be referred to as a higher-level device of the battery management system 120. In some embodiments, the battery management system 120 may receive a control signal from the higher-level device 11 and control the battery module 110 in response to the control signal.

The battery management system 120 may perform communication with the higher-level device 11 according to a communication protocol. In cases that the communication protocol is changed in the higher-level device 11, the battery management system 120 may receive metadata of the changed communication protocol from the higher-level device 11, generate a communication map based on the metadata of the changed communication protocol, and perform communication based on the communication map.

FIG. 2 is a block diagram of a battery management system according to some embodiments.

Referring to FIG. 2, a battery management system 200 may include a communication circuit 210, a protocol generator 220, a network module 230, and a storage device 240.

The communication circuit 210 may transmit data to a higher-level device 20 or receive data from the higher-level device 20. In some embodiments, the communication circuit 210 may be a transceiver, and the transceiver may provide a physical layer of communication.

The protocol generator 220 may generate a communication map of a communication protocol based on metadata of the communication protocol. In some embodiments, the protocol generator 220 may generate the communication map of the communication protocol based on the metadata of the communication protocol and a data map of the battery management system 200. The protocol generator 220 may identify a change of the communication protocol by comparing a start sequence of the stored metadata with a start sequence received from the higher-level device 20. The protocol generator 220 may perform communication based on the generated communication map by registering the generated communication map in the network module 230. The protocol generator 220 may generate data (or a data frame) to be transmitted by converting data generated by the battery management system 200 into a format defined in the communication map.

In some embodiments, the protocol generator 220 and the network module 230 may be implemented as a processor. The processor may be processing circuitry, and may be, for example, a microcontroller unit (MCU).

The storage device 240 may store the metadata of the communication protocol. The storage device 240 may store the data map used by the battery management system 200. In some embodiments, the storage device 240 may be a volatile memory or a nonvolatile memory.

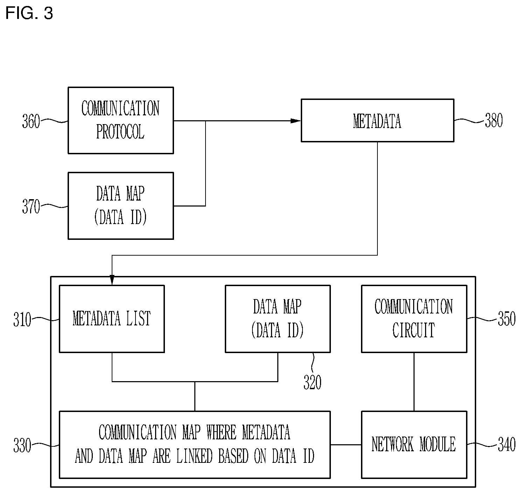

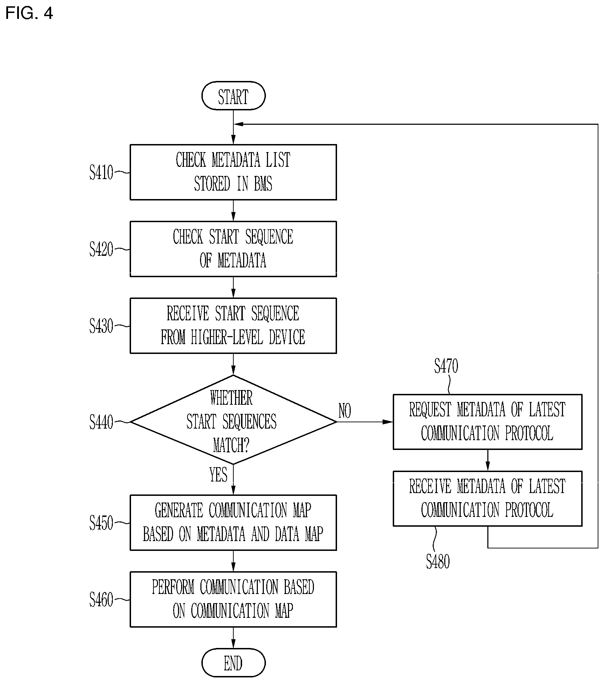

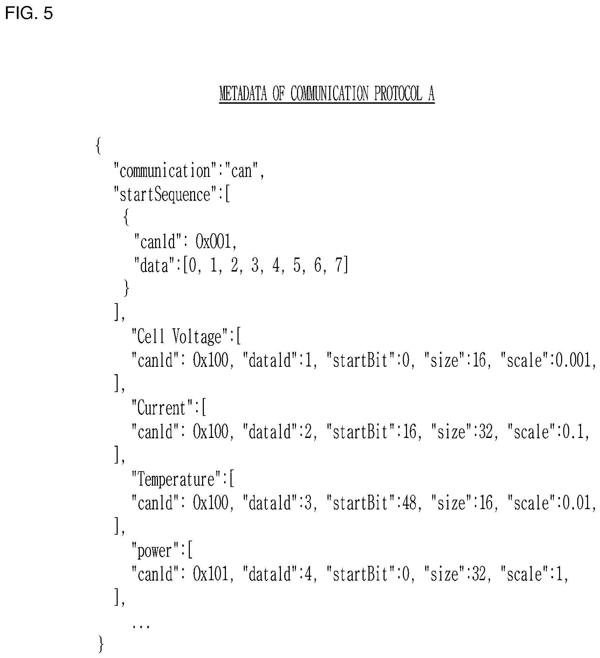

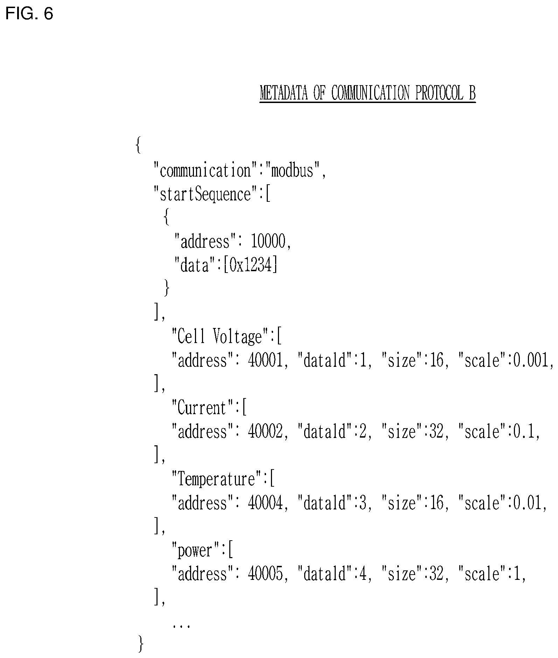

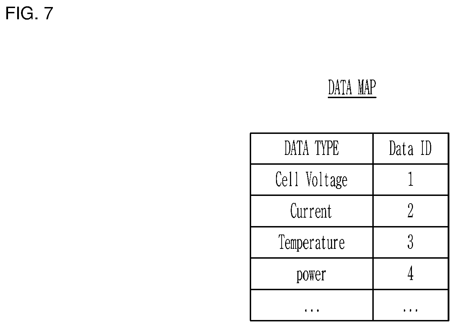

FIG. 3 is a diagram for explaining a change of a communication protocol according to some embodiments, FIG. 4 is a flowchart of a communication protocol changing method according to some embodiments, FIG. 5 and FIG. 6 are each a diagram illustrating an example of metadata of a communication protocol according to some embodiments, and FIG. 7 is a diagram illustrating an example of a data map of a battery management system according to some embodiments.

Referring to FIG. 3 and FIG. 4, in cases that a battery management system is powered on, the battery management system (e.g., a protocol generator (e.g., 220 in FIG. 2)) may check a metadata list 310 stored in the battery management system (e.g., a storage device (e.g., 230 in FIG. 2) of the battery management system) (S410). The metadata list 310 may be a list of metadata of a communication protocol stored in the storage device 240. In some embodiments, the metadata may be basic information for generating the communication protocol, and may include, for example, a communication method, a start sequence, and a definition of data used for communication. The start sequence may be a sequence defined to distinguish the communication protocol.

For example, it is assumed that the metadata list 310 includes metadata of a communication protocol A and metadata of a communication protocol B. For example, the communication protocol A may be a CAN (controller area protocol), and the communication protocol B may be a Modbus RTU (remote terminal unit) protocol based on RS485. In this case, as shown in FIG. 5, for example, the metadata of the communication protocol A may include a communication method (CAN), a start sequence, and a definition for each data type used in the battery management system. The data type is a type of data generated while the battery management system monitors the battery module, and may include, for example, cell voltage, current, temperature, and/or power. In the metadata of the communication protocol A, the start sequence may be defined, for example, as a sequence of a value (e.g., a CAN identifier (CAN ID)) used for communication of the communication protocol A and a data value, and the definition for the data type may include information about a transmission format of the data type and a data ID (dataId). The information about the transmission format may include, for example, a CAN ID (canId) of a CAN frame used to transmit data of the corresponding data type, a start bit (startBit) indicating a bit where the corresponding data starts in the CAN frame, a data size (size) indicating a size of the corresponding data, and a scale of the corresponding data. As another example, as shown in FIG. 6, the metadata of the communication protocol B may include a communication method (modbus), a start sequence, and a definition for each data type used in the battery management system. In the metadata of the communication protocol B, the start sequence may be defined, for example, as a sequence of a value (e.g., an address) used for communication of the communication protocol B and a data value, and the definition for the data type may include information about the transmission format of the data type and a data ID (dataId). The information about the transmission format may include, for example, an address used to transmit data of the corresponding data type, a data size (size) indicating the size of the corresponding data, and a scale of the corresponding data.

The protocol generator 220 may check a start sequence among contents stored in each piece of metadata of the metadata list 310 (S420). The battery management system (e.g., a communication circuit (e.g., 210 in FIG. 2)) may receive a start sequence from a higher-level device (S430). The protocol generator 220 may determine whether the start sequence received from the higher-level device matches the metadata (i.e., the start sequence of the metadata) (S440). In cases that the start sequence received from the higher-level device matches the metadata (S440: YES), the protocol generator 220 may generate a communication map 330 based on the matched metadata and a data map 320 stored in the battery management system (e.g., the storage device 240) (S450). The battery management system may perform communication with the higher-level device based on the communication map 330 (S460). The communication map 330 may be a map that defines in what manner data will be transmitted. In some embodiments, the protocol generator 220 may register the generated communication map 330 in a network module 340 and perform the communication through a communication circuit 350.

For example, in cases that the battery management system receives a start sequence including a CAN ID of 0x100 and a data value of [0, 1, 2, 3, 4, 5, 6, 7] from the higher-level device, the received start sequence may match the start sequence of the metadata of the communication protocol A, and therefore, the protocol generator 220 may generate the communication map 330 for the communication protocol A based on the metadata of the communication protocol A. In some embodiments, the protocol generator 220 may generate the communication map 330 for the communication protocol A by linking the metadata of the protocol A and the data map 320 stored in the battery management system (e.g., the storage device 240). The data map 320 may include a mapping between each of data variables (i.e., data types) used in the battery management system and a corresponding data ID. For example, as shown in FIG. 7, the data map may include a mapping between cell voltage and a data ID of 1, a mapping between current and a data ID of 2, a mapping between temperature and a data ID of 3, and a mapping between power and a data ID of 4. The protocol generator 220 may generate the communication map 330 by linking the metadata of the communication protocol A and the data map 320 based on the data ID. Therefore, referring to FIG. 5 and FIG. 7, because the cell voltage is linked to the metadata with the data ID of 1, the protocol generator 220 may transmit the cell voltage through the first and second bytes data[0, 1] of the CAN frame having the CAN ID of 0x100. Because the current is linked to the metadata with the data ID of 2, the protocol generator 220 may transmits the current through the third to sixth bytes data[2, 3, 4, 5] of the CAN frame having the CAN ID of 0x100. Because the temperature is linked to the metadata with the data ID of 3, the protocol generator 220 may transmit the temperature through the seventh and eighth bytes data[6, 7] of the CAN frame having the CAN ID of 0x100. Because the power is linked to the metadata with the data ID of 4, the protocol generator 220 may transmit the power through the first to fourth bytes data[0, 1, 2, 3] of a next CAN frame having the CAN ID of 0x101.

In cases that the start sequence received from the higher-level device matches the start sequence of the metadata of the communication protocol B, referring to FIG. 6 and FIG. 7, because the cell voltage is linked to the metadata with the data ID of 1, the protocol generator 220 may transmit the cell voltage through 2 bytes at an address of 40001. Because the current is linked to the metadata with the data ID of 2, the protocol generator 220 may transmit the current through 4 bytes at an address of 40002. Because the temperature is linked to the metadata with the data ID of 3, the protocol generator 220 may transmit the temperature through 2 bytes at an address of 40004. Because the power is linked to the metadata with the data ID of 4, the protocol generator 220 may transmit the power through 4 bytes at an address of 40005.

Meanwhile, in cases that there is no metadata in the metadata list that matches the start sequence received from the higher-level device (S440: NO), the protocol generator 220 may request metadata of the latest communication protocol from the higher-level device (S470). That is, in cases that the communication protocol is changed in the higher-level device, the battery management system may request the metadata of the changed communication protocol. For example, in cases that the battery management system receives a start sequence including a CAN ID of 0x100 and a data value of [0, 0, 0, 0, 0, 0, 0, 0] from the higher-level device, because no metadata matching the received start sequence is stored, the protocol generator 220 may request the metadata of the latest communication protocol from the higher-level device.

In some embodiments, the higher-level device may generate metadata 380 of the latest communication protocol based on a communication protocol (i.e., latest communication protocol) 360 and a data ID of a data map 370 of the battery management system. The higher-level device may transmit the metadata 380 of the latest communication protocol 360 to the battery management system, and the battery management system (e.g., the protocol generator 220) may update the metadata list by storing the received metadata in the battery management system (e.g., the storage device 240) (S480). As the metadata list is updated, since there is metadata that matches the start sequence received from the higher-level device (S410 to S440), the battery management system may perform communication based on the communication map generated based on the metadata of the latest communication protocol (S450 and S460).

In some embodiments, a processor may perform the communication protocol changing method described with reference to FIG. 4 by executing instructions.

As described above, in some embodiments, in cases that the start sequence received from the higher-level device does not match the start sequence of the first metadata included in the metadata list stored in the battery management system, the processor may transmit a request (i.e., a request for metadata of the latest communication protocol) to the higher-level device, receive second metadata of a second communication protocol (i.e., the latest communication protocol) from the higher-level device in response to the request, and perform communication with the higher-level device based on the second metadata.

As described above, according to some embodiments, even if the communication protocol is changed in the higher-level device, the battery management system can receive and store the metadata of the changed communication protocol from the higher-level device, thereby performing communication according to the changed communication protocol. Therefore, because a change (alternatively, update) of software due to the change of the communication protocol are unnecessary, the time and cost associated with the software change can be reduced.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

## Claims

1. A battery management system configured to monitor a battery module, the battery management system comprising:
a communication circuit configured to be used for communication with a higher-level device;
a storage device configured to store a metadata list including first metadata of at least one first communication protocol; and
a processor configured to, in response to a start sequence received from the higher-level device not matching a start sequence of the first metadata included in the metadata list,
transmit a request to the higher-level device,
receive second metadata of a second communication protocol from the higher-level device in response to the request, and
perform communication with the higher-level device based on the second metadata.

2. The battery management system of claim 1, wherein the processor is further configured to include the second metadata in the metadata list.

3. The battery management system of claim 1, wherein the storage device is further configured store a data map including a mapping between a data type used in the battery management system and a first data identifier, and
wherein the processor is further configured to, in response to the start sequence received from the higher-level device matching a start sequence of the second metadata,
generate a communication map based on the second metadata and the data map, and
perform communication with the higher-level device based on the communication map.

4. The battery management system of claim 3, wherein the data type is a type of data generated by monitoring, by the battery management system, the battery module.

5. The battery management system of claim 3, wherein the second metadata includes a start sequence of the second communication protocol and a definition for the data type used in the battery management system,
wherein the definition for the data type includes information about a transmission format of the data type and a second data identifier, and
wherein the processor is further configured to generate the communication map by linking the second metadata and the data map based on the first data identifier and the second data identifier.

6. The battery management system of claim 3, wherein the start sequence of the second communication protocol is a sequence defined to distinguish the second communication protocol.

7. The battery management system of claim 3, wherein the start sequence of the second communication protocol is a sequence including a value used for communication of the second communication protocol and a data value.

8. The battery management system of claim 1, wherein the processor is further configured to, in response to the start sequence received from the higher-level device matching the start sequence of the first metadata, perform communication with the higher-level device based on the first metadata.

9. A battery apparatus, comprising:
the battery management system according to claim 1; and
the battery module.

10. A method of changing a communication protocol in a battery management system configured to monitor a battery module, the method comprising:
receiving a start sequence from a higher-level device;
determining whether the start sequence received from the higher-level device matches a start sequence of first metadata stored by the battery management system;
transmitting a request to the higher-level device in response to the received start sequence not matching the start sequence of the first metadata;
receiving second metadata of a second communication protocol from the higher-level device in response to the request; and
performing communication with the higher-level device based on the second metadata.

11. The method of claim 10, wherein receiving the second metadata comprises storing the second metadata in the battery management system.

12. The method of claim 10, wherein performing communication with the higher-level device comprises:
in response to the received start sequence matching a start sequence of the second metadata, generating a communication map based on the second metadata and a data map stored in the battery management system; and
performing communication with the higher-level device based on the communication map,
wherein the data map comprises a mapping between a data type used in the battery management system and a first data identifier.

13. The method of claim 12, wherein the data type is a type of data generated by monitoring, by the battery management system, the battery module.

14. The method of claim 12, wherein the second metadata comprises a start sequence of the second communication protocol and a definition for the data type used in the battery management system,
wherein the definition for the data type includes information about a transmission format of the data type and a second data identifier, and
wherein generating the communication map comprises generating the communication map by linking the second metadata and the data map based on the first data identifier and the second data identifier.

15. The method of claim 12, wherein the start sequence of the second communication protocol is a sequence defined to distinguish the second communication protocol.

16. The method of claim 12, wherein the start sequence of the second communication protocol is a sequence including a value used for communication of the second communication protocol and a data value.
